# EUROPEAN PATENT SPECIFICATION

(11) **EP 3 696 700 B1**
(45) Date of publication and mention of the grant of the patent: **14.01.2026**
(21) Application number: 19157811.1
(22) Date of filing: 18.02.2019
(51) Int. Cl.: G06F 21/57, H04L 9/40

(54) **SECURITY STATUS OF SECURITY SLICES**
SICHERHEITSSTATUS VON SICHERHEITSSCHICHTEN
ÉTAT DE SÉCURITÉ DE TRANCHES DE SÉCURITÉ

(43) Date of publication of application: 19.08.2020
(73) Proprietor: Nokia Technologies Oy, 02610 Espoo (FI)
(72) Inventor: LIMONTA MARQUEZ, Gabriela Claret, 02230 Espoo (FI); OLIVER, Ian Justin, 01150 Söderkulla (FI)
(74) Representative: Whiting, Gary

(56) References cited:
- WO-A1-2017/188392
- US-A1- 2018 213 003
- US-A1- 2018 324 187
- "Network Functions Virtualisation (NFV); Trust; Report on Attestation Technologies and Practices for Secure Deployments", vol. WG NFV SEC Security, no. V0.0.7, 18 February 2017 (2017-02-18), pages 1 - 27, XP014303445, Retrieved from the Internet <URL:docbox.etsi.org/ISG/NFV/Open/Drafts/SEC007_NFV_Attestation_report/NFV-SEC007v007.docx> [retrieved on 20170218]

## Description

### Field

The present specification relates to a security status of a network element or a security slice comprising one or more network elements.

### Background

There remains a need for alternative or improved systems for managing security status, such as levels of security assurance, in network elements security slices.

US patent publication US2018324187A1 describes a method and device provided for use in a network including at least one existing device. At least one virtual sub-network is established within the network and a certain trust level is assigned to the at least one virtual sub-network. The device is assigned a first trust level. The device receives a token correlated with the assigned first trust level. The device is permitted into the at least one virtual subnet upon presentation of that token if the first trust level corresponds or includes the certain trust level.

Publication WO2017/188392A1 discloses a method for defining the security requirements of a network slice.

### Summary

In a first aspect, this specification describes an apparatus comprising: means for sending one or more requests to an attestation server, wherein each request requests security attributes corresponding to one of one or more network elements of a security slice of a system; means for receiving the requested security attributes from the attestation server; and means for processing the received security attributes to determine a security status of the security slice. The security attributes may, for example, be properties or measurements. Some embodiments further comprise means for outputting the determined security status of the security slice.

Some embodiments comprise means for comparing the determined security status of the security slice with a required security status for the security slice.

Some embodiments comprise means for adding one or more additional network elements to the security slice. The means for adding one or more network elements to the security slice may comprise means for obtaining information relating to each of the one or more network elements to be added to the security slice. The said information may comprise at least one of availability information and/or authentication parameters and/or information regarding whether the network element(s) are suitable to be added to the slice.

Some embodiments further comprise: means for receiving, from the attestation server, security attributes (e.g. properties or measurements) of a first additional network element to be added to the security slice; means for determining an integrity level of the first additional network element based on the received security attributes of said first additional network element; and means for preventing the first additional network element from being added to the security slice in the event that said integrity level is below a required level. The integrity level may, for example, be a security status.

The means for processing the received security attributes may further comprise means for determining whether any of the network elements of the security slice fail to satisfy a defined requirement. In response to detecting a failing network element, another element of the system may be informed (e.g. at least one of: the VIM, the security orchestrator and/or the SDN). Alternatively, or in addition, the identified network element may be repaired.

The apparatus may be one of a security attribute manager and a trusted slice manager.

A network element may comprise at least one of: a physical network element, and/or a virtualized network function, and/or a virtual machine image, and/or a virtual machine instance. Alternatively, or in addition, a network element may, for example, be a core network element, an edge device, a mobile communication device, a network function virtualisation node, a virtualised network function or an Internet of Things device such as a wireless sensor. In some embodiments, a network element may comprise a top-level element, such as an NFVI element, server, edge device, IoT device, VM image, VM instance, VNF, UE (mobile device) etc. The network element may comprise a structured element comprises a number of top-level elements.

The requested security attributes may comprise at least one of: a measured boot capability, and/or a secure boot capability, and/or a runtime integrity measurement, and/or a virtual machine integrity level.

The security status of the security slice may comprise a level of assurance.

The said means may comprise at least one processor; and at least one memory including computer program code, the at least one memory and computer program code configured to, with the at least one processor, cause the performance of the apparatus.

In a second aspect, this specification describes a system comprising an apparatus as described above with reference to the first aspect and further comprising: an attestation server for receiving requests for security attributes; and one or more network elements.

Each network element may further comprise a trust agent for providing an interface between the respective network element and said attestation server.

In a third aspect, this specification describes a method comprising: sending one or more requests to an attestation server, wherein each request requests security attributes corresponding to one of one or more network elements of a security slice of a system; receiving the requested security attributes from the attestation server; and processing the received security attributes to determine a security status of the security slice. Some embodiments further comprise outputting the determined security status of the security slice.

The method may comprise comparing the determined security status of the security slice with a required security status for the security slice.

The method may comprise adding one or more network elements to the security slice.

The method may comprise: receiving, from the attestation server, security attributes (e.g. properties or measurements) of a first additional network element to be added to the security slice; determining an integrity level of the first additional network element based on the received security attributes of said first additional network element; and preventing the first additional network element from being added to the security slice in the event that said integrity level is below a required level. The integrity level may, for example, be a security status.

Processing the received security attributes may further comprise determining whether any of the network elements of the security slice fail to satisfy a defined requirement.

In a fourth aspect, this specification describes any apparatus configured to perform any method as described with reference to the third aspect.

In a fifth aspect, this specification describes computer-readable instructions which, when executed by computing apparatus, cause the computing apparatus to perform any method as described with reference to the third aspect.

In a sixth aspect, this specification describes a computer program comprising instructions for causing an apparatus to perform at least the following: send one or more requests to an attestation server, wherein each request requests security attributes corresponding to one of one or more network elements of a security slice of a system; receive the requested security attributes from the attestation server; and process the received security attributes to determine a security status of the security slice.

In a seventh aspect, this specification describes a computer-readable medium (such as a non-transitory computer readable medium) comprising program instructions stored thereon for performing at least the following: sending one or more requests to an attestation server, wherein each request requests security attributes corresponding to one of one or more network elements of a security slice of a system; receiving the requested security attributes from the attestation server; and processing the received security attributes to determine a security status of the security slice.

In an eighth aspect, this specification describes an apparatus comprising: at least one processor; and at least one memory including computer program code which, when executed by the at least one processor, causes the apparatus to: send one or more requests to an attestation server, wherein each request requests security attributes corresponding to one of one or more network elements of a security slice of a system; receive the requested security attributes from the attestation server; and process the received security attributes to determine a security status of the security slice.

In a ninth aspect, this specification describes an apparatus comprising: a first output for sending one or more requests to an attestation server, wherein each request requests security attributes corresponding to one of one or more network elements of a security slice of a system; a first input for receiving the requested security attributes from the attestation server; and a processor for processing the received security attributes to determine a security status of the security slice. The security attributes may, for example, be properties or measurements. Some embodiments further comprise means a second output outputting the determined security status of the security slice.

### Brief description of the drawings

Example embodiments will now be described, by way of non-limiting examples, with reference to the following schematic drawings, in which:
FIG. 1 is a block diagram of a system in accordance with an example embodiment;
FIG. 2 is a block diagram of a system in accordance with an example embodiment;
FIG. 3 is a block diagram of a system in accordance with an example embodiment;
FIG. 4 is a flow chart showing an algorithm in accordance with an example embodiment;
FIG. 5 is a flow chart showing an algorithm in accordance with an example embodiment;
FIG. 6 is a message sequence in accordance with an example embodiment;
FIGS. 7A and 7B are block diagrams of systems in accordance with an example embodiment;
FIG. 8 is a block diagram of a system in accordance with an example embodiment;
FIG. 9 is a flow chart showing an algorithm in accordance with an example embodiment;
FIG. 10 is a message sequence in accordance with an example embodiment;
FIG. 11 is a block diagram of components of a system in accordance with an example embodiment; and
FIGS. 12A and 12B show tangible media, respectively a removable memory unit and a compact disc (CD) storing computer-readable code which when run by a computer perform operations according to example embodiments.

### Detailed description

In the description and drawings, like reference numerals refer to like elements throughout.

Computing systems, including (but not limited to) distributed or cloud computing systems, may include a wide range of hardware or other elements connected thereto. Such modules may, for example, be provided to run virtual workloads, base stations of a telecommunication network, edge devices etc. At least some of those elements may be arranged in slices, as described further below.

The example embodiments disclose apparatus and methods for creating security slices for managing levels of security assurance in network slices. An attestation server may be utilized for creating interfacing with security slices (such as trust slices). Such security slices are independent of network slices and may, for example, be orthogonal to network function virtualisation (NFV) slices. Some of the example uses of security slicing may include guaranteeing different levels of security assurances for critical workload deployment, such as:
- Attestation;
- Underlying hardware or software integrity (including run-time integrity);
- Virtual network function (VNF) integrity checks over life-cycle (including VNF image load, VNF instance start, suspend, migrate, and/or destroy);
- Supply-chain integrity (for example: only allowing known, trusted VNF supply chain, notarisation technologies);
- Additional monitoring and analysis (artificial intelligence or machine learning, proactive protections) features (for example: monitoring, firewalls, network encryption on demand);
- Software defined networks (SDN) and Management and Orchestration (MANO) software integration; and
- Extension outside Core NFV Infrastructure, such as Edge Slicing and IoT slicing

As defined in ETSI NFV SEC0007 (2018), the overall attestation scope depends also on the exact use case and, most importantly, on the agreed Level-of-Assurance (LoA), described in SEC007. In particular, the LoAs define the sets of systems and components to be considered during attestation procedures and, thus, facilitate the determination of the overall attestation scope. An overview of the defined LoAs in relation to the attestation scope is depicted in table 1.

**Table 1: Level of Assurance to Attestation Scope Mapping**

| **LoA Level** | **LoA defined set of attested Systems and Components** | **Type** | **Affected Attestation Sub-Scope(s)** | **Attestation** |
|---|---|---|---|---|
| 0 | all components | None | None | None |
| 1 | Hardware and Virtualization Platform | Loadtime | Platform + Hypervisor | Local |
| 2 | Hardware and Virtualization Platform | Loadtime | Platform + Hypervisor | Remote |
| 3 | VNF Software Packages | Loadtime | Virtual Machine + Application | Local |
| 4 | VNF Software Packages | Loadtime | Virtual Machine + Application | Remote |
| 5a | Hardware and Virtualization Platform (Infrastructure Network) | Runtime | Platform + Hypervisor | Remote |
| 5b | Virtualization Platform and VNF Software Packages | Runtime | Hypervisor + Virtual Machine + Application | Remote |

### Definition of Integrity levels

In some example embodiments, integrity levels (sometimes referred to herein as security status) may be determined for each network element of a system. Each network element may belong to one or more security slices. Details of how integrity levels/ security statuses are used in the example embodiments are discussed later in the document. The integrity levels for security slices define properties or measurements that can be taken in order to satisfy a specific level of assurance (LoA). A level of assurance may be guaranteed based on the integrity level/ security status. An example mapping of integrity level of security slices with respect to the level of assurance guaranteed by the security slice is illustrated in Table 2. For example, in order to guarantee a particular LoA, the devices must pass all the integrity checks defined in the mapping of Table 2.

**Table 2 - Mapping between LoAs and integrity levels**

| LoA Level | Integrity level requirements |
|---|---|
| 0 | None |
| 1 | Platform secure boot level 1 OR measured boot level 3 |
| 2 | Platform measured boot level 4 |
| 3 | Virtual machine Image level 1 AND Virtual machine Instance level 1 |
| 4 | Virtual machine Image level 2 AND Virtual machine Instance level 2 |
| 5a | Virtual machine Image level 3 AND Virtual machine Instance level 3 |
| 5b | Virtual machine Image level 3 AND Platform Runtime level 2 |

The LoAs define the desired level of trustworthiness or integrity of the platform. They also define what subdomains need to be attested to guarantee that level of assurance. On the other hand, the trusted slice integrity levels define concrete measurements that can be considered using attestation in order to guarantee the security status of the attestation scope defined by the LoA.

For better understanding of Table, 2, the integrity levels of various platforms are explained below. There may be two level hierarchies for platform integrity measurements depending on the capabilities of the platform. Many variants to the arrangements described herein are possible.

### Platform with Measured Boot capabilities

For a platform with Measured Boot capabilities, there may be five integrity levels that can be achieved:
- Level 0: No integrity checks
- Level 1: Verification of the credentials for the RTR (TPM). This includes a validity check of the Endorsement Certificate and proof of the ownership of the trusted platform module (TPM) keys (e.g. endorsement and attestation keys).
- Level 2: Verification of the integrity of the core root of trust measurements (CRTM) of the system, in addition to the checks of level 1. This includes ACM and BIOS code modules.
- Level 3: Verification of the integrity of the static root of trust (SRTM) of the system, in addition to the checks of level 2. This includes Host Platform Configuration, Optional ROMs, Optional ROM configuration and data, IPL code, IPL configuration and data and Launch Control Policies, if they exist.
- Level 4: Verification of the integrity of the dynamic root of trust (DRTM) of the system, in addition to the checks of level 3. This includes the kernel, OS and virtualization platform.

The checks for levels 1 to 3 can be done locally and/or remotely and level 4 can only be done remotely. Additionally, these integrity levels include both the platform and the hypervisor sub-scopes.

### Platform with Secure Boot capabilities

For a platform with Secure Boot capabilities, there may be two integrity levels that can be achieved:
- Level 0: No integrity checks.
- Level 1: Verification of the firmware, bootloader and virtualization platform (OS/kernel/hypervisor), based on digital signatures or certificates.

Level 1 for a platform with Secure Boot capabilities can only be achieved locally. These checks are performed during boot time and if any of the checks fail, the platform will not start up. For a platform with Secure Boot capabilities, there is only one integrity level which includes the all the checks of the platform and hypervisor sub-scopes.

### Platform that is capable of performing runtime integrity measurements

For a platform that is capable of performing runtime integrity measurements (e.g. by using a kernel module such as Linux IMA), there are four integrity levels that may be be achieved:
- Level 0: No integrity checks.
- Level 1: Local verification of the integrity of the static filesystem (this can include configuration files, binaries, etc.) by preventing access to files that have changed, in addition to the checks from either measured boot level 4 OR secure boot level 1.
- Level 2: Remote verification of the integrity of the filesystem, in addition to the checks of level 1, in addition to the checks from level 1.
- Level 3: Verification of the deployed infrastructure network for the VNF, in addition to the checks of level 2.

### Virtual machine sub-scope

For the virtual machine sub-scope, there are different integrity levels that can be achieved, depending on whether the checks are for a virtual machine image or a virtual machine instance.

### Virtual machine image

For a virtual machine image, there may be three integrity levels that can be achieved:
- Level 0: No integrity checks.
- Level 1: Local verification of the signature of the image during onboarding time.
- Level 2: Remote verification of the signature of the image during onboarding time, in addition to the checks for level 1.

### Virtual machine instance

For a virtual machine instance, there may be four integrity levels that can be achieved:
- Level 0: No integrity checks.
- Level 1: Local verification of the image to be launched at instantiation time, by using digital signatures.
- Level 2: remote verification of the image to be launched at instantiation time, in addition to the checks from level 1.
- Level 3: remote verification of the integrity of the virtual machine instance during runtime and throughout all the operations that the instance may go through during its lifecycle (including shutdown, suspend and migration), in addition to the checks for level 2.

Note that the levels of integrity defined for a platform can be achieved by a virtual machine instance, given that it has the capabilities of a virtual trusted platform module (vTPM).

A typical NFV system consists of any number of NFVI elements (typically servers of some form) managed by management and orchestration (MANO). Using the concept of slicing, these physical machines can be partitioned into logical blocks and purposed for specific purposes, for example, a specific operator provisioning etc. The mechanisms for slicing based on network partitioning are well known.

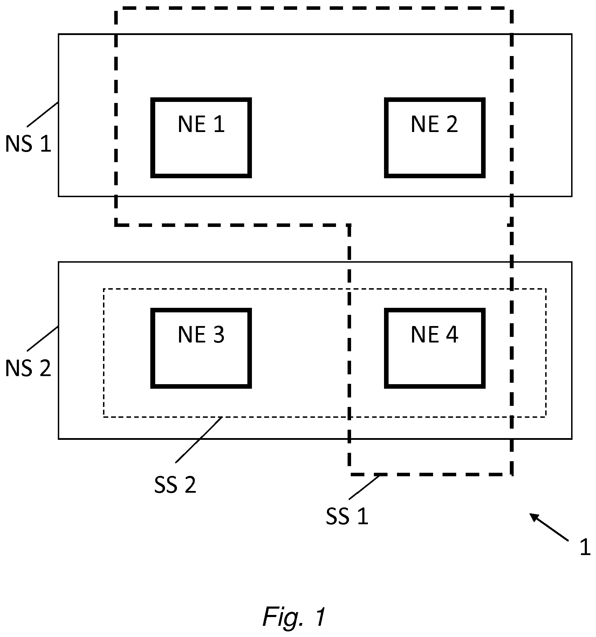

FIG. 1 is a block diagram of a system, indicated generally by the reference numeral 1, in accordance with an example embodiment. System 1 comprises a plurality of network elements (NE), namely NE1, NE2, NE3, and NE4. The network elements are assigned to one or more network slices and/or one or more security slices. As discussed above, security slices (SS) and network slices (NS) are created independently. Further, a network element may belong to one or more security slices at the same time. However, in many implementations a network element may only belong to one network slice at a time. In the system 1, NE1 and NE2 belong to a first network slice (NS1), while NE3 and NE4 belong to a second network slice (NS2). Also, NE1, NE2 and NE4 are assigned to a first security slice (SS1), and NE3 and NE4 are assigned to a second security slice (SS2).

Network elements may be assigned to network slices based on their uses, customers, etc. For example, NS1 may specifically contain network elements relating to Internet-of-Things (IoT) devices, and NS2 may specifically contain network elements relating to medical devices.

Network elements may be assigned to security slices regardless of their functionality and regardless of their corresponding network slicing. A security status of SS1 and SS2 may be indicated by Level of Assurance (LoA) level, which is determined based on security attributes of the network elements assigned to the security slices. For example, security status of SS1 may be dependent upon the security attributes of NE1, NE2 and NE4, and security status of SS2 may be dependent upon the security attributes of NE3 and NE4. The security status of the security slices may be indicated by LoA level. For example, if SS1 has LoA level 2 (explained in Tables 1 and 2 above) and SS2 has LoA level 1, this may mean that integrity levels of NE1, NE2, and NE4 are collectively higher than collective integrity levels of NE3 and NE4.

Network elements may be chosen for specific workloads based on the network slicing as well as security slicing. More particularly, for a specific workload, a network slice requirement and a security slice requirement may be defined, and one or more network elements may be selected for the specific workload accordingly.

For example, assume that there is a requirement for a first workload for network elements relating to medical devices and the LoA level of the network elements must be at least 2. Referring to FIG. 1, NS2 is a network slice containing network elements NE3 and NE4 relating to medical devices, and SS1 is a security slice with LoA level 2. A workload manager may then determine which network elements meet the both the network slice and security slice requirements of the first workload. It may be determined that only NE4 is suitable for the first workload, as NE4 relates to medical devices, and also belongs to SS1 which has LoA level 2.

In an alternative example, assume that there is a requirement for a second workload for network elements relating to IoT devices and LoA level of the network elements must be at least 2. In this case, only NE1 and NE2 are suitable for the second workload, as they are in NS1 relating to IoT devices and they belong to SS1 which has LoA level 2.

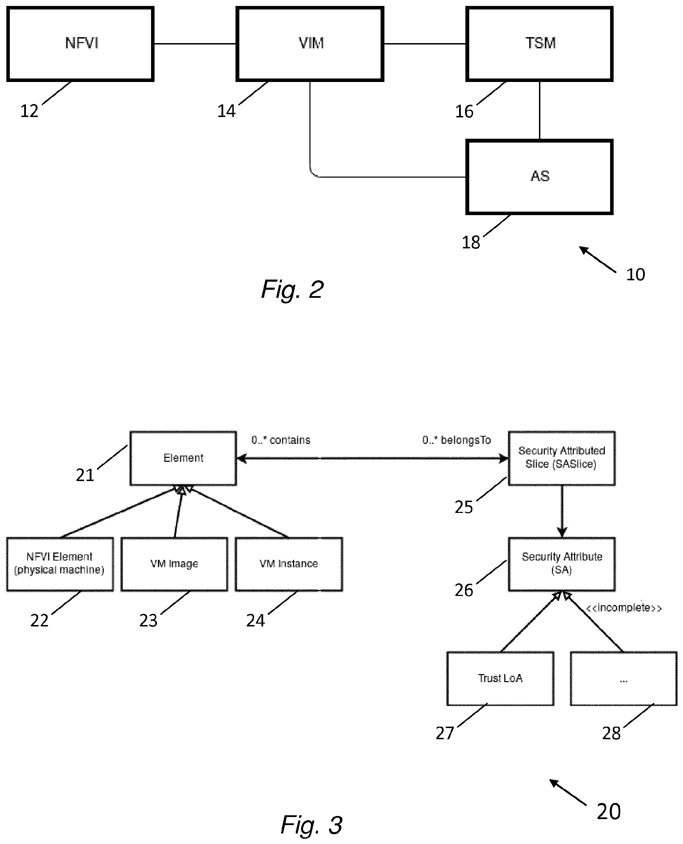

FIG. 2 is a block diagram of a system, indicated generally by the reference numeral 10, in accordance with an example embodiment. The system 10 comprises network functions virtualization infrastructure (NFVI) 12, a virtual infrastructure manager (VIM) 14, a trusted slice manager (TSM) 16 and an attestation server (AS) 18.

The network functions virtualization infrastructure (NFVI) 12 comprises multiple network elements of a system. The network elements may take many forms, such as physical network elements (such as servers), virtualised network function nodes, a virtual machine image, a virtual machine instance, an edge node, an Internet-of-things (IoT) enabled device, a communications module etc. The network elements of the NFVI 12 may be grouped into one or more slices. One or more of those slices may be security slices, as discussed above with reference to FIG. 1.

The trusted slice manager (TSM) 16 is responsible for managing aspects of security slices. The trusted slice manager 16 may communicate with the virtual infrastructure manager 14 and the attestation server 18 to obtain security attributes corresponding to network elements of a security slice. The attestation server 18 provides such information to the trusted slice manager 16, as discussed in detail below.

On the basis of the security attributes corresponding to network elements of a security slice, the trusted slice manager 16 can determine a security status, e.g. a Level of Assurance (LoA), for a particular security slice that is formed from network elements of the NFVI 12. Algorithms for determining a security status of a security slice are discussed further below.

FIG. 3 is a block diagram of a system, indicated generally by the reference numeral 20, in accordance with an example embodiment.

The system 20 comprises a group of network elements 21. As shown schematically in FIG. 3, the network elements 21 may include one or more NFVI elements or physical machines 22, one or more virtual machine images 23 and/or one or more virtual machine instances 24. The system 20 also comprises a number of security slices 25. As shown schematically in FIG. 3, the security slice 25 has a security attribute 26. The security attribute 26 may include a number of parts, such as a trust Level of Assurance 27 and one or more other parts 28.

An example network element 21 may belong to any number of security slices 25 (including zero). Similarly, a security slice may include any number of network elements 21 (including zero).

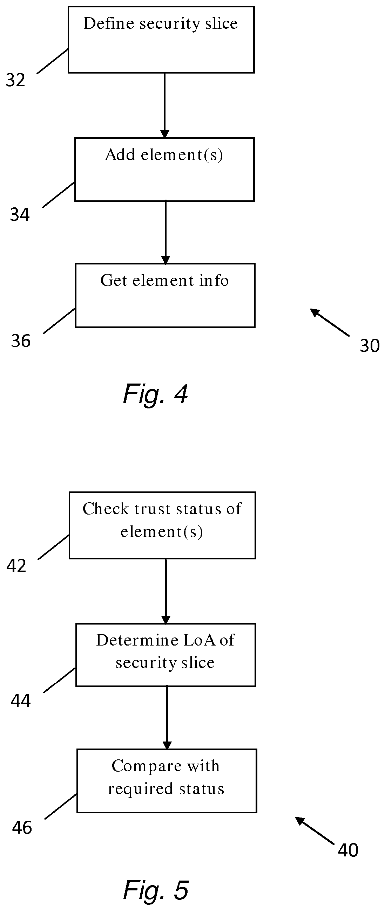

FIG. 4 is a flow chart showing an algorithm, indicated generally by the reference numeral 30, in accordance with an example embodiment. The algorithm 30 shows an example arrangement for building a security slice.

The algorithm 30 starts at operation 32, where a security slice is defined. For example, the operation 32 may involve providing a name for the security slice and providing other basic information. Thus, the operation 32 may result in a security slice 25 being instantiated.

At operation 34, one or more elements are added to the slice. For example, instances of the element 21 may be added to an instance of the security slice 25 described above.

At operation 36, information regarding the added element(s) is obtained. As described further below, the information obtained in the operation 36 may be used for functions such as determining security attributes of the added element(s).

As described above, one aspect of a security slice is to define a Level of Assurance (LoA) that the elements in that slice must be able to guarantee. Indeed, there may be provided means for determining an integrity level or security status of the network element referred to in operation 34 based on the received security attributes of said first additional network element. In the event that the integrity level or security status is below a required level, then the network element may be prevented from being added to the security slice.

FIG. 5 is a flow chart showing an algorithm, indicated generally by the reference numeral 40, in accordance with an example embodiment.

The algorithm 40 starts at operation 42 where a trust status or security status of one or more elements of a relevant security slice is obtained. Then, at operation 44, a level of Assurance (LoA) is determined for the security slice. An example implementation of the algorithm 40 is described further below.

Optionally, the algorithm 40 may include an operation 46 in which the security status determined in operation 44 is compared with a required security status for the security slice. If a security status is below a required security status, then action may be taken (as discussed further below).

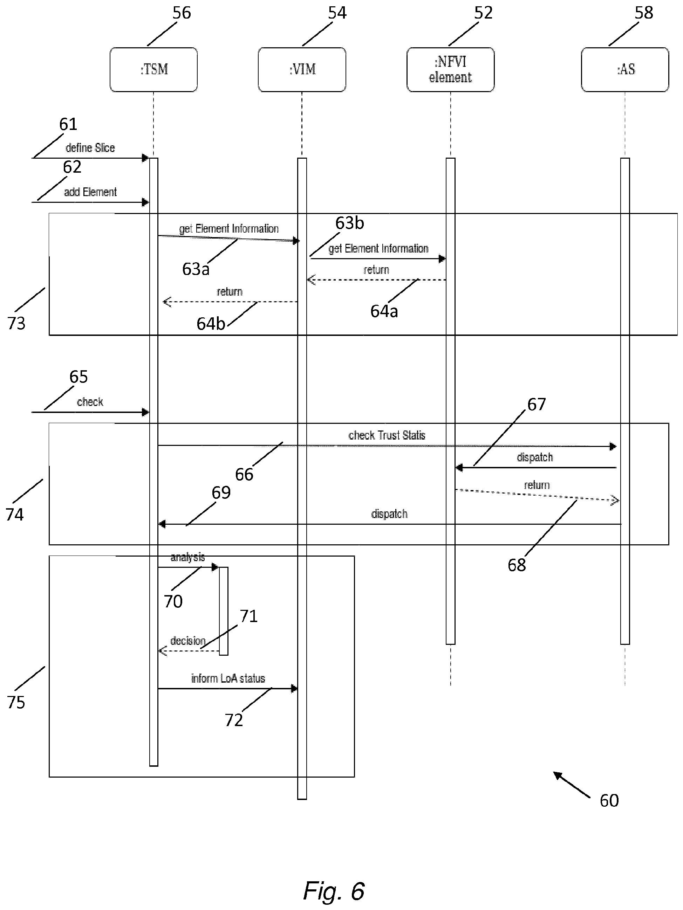

FIG. 6 is a message sequence, indicated generally by the reference numeral 60, in accordance with an example embodiment. The message sequence 60 shows an example sequence of messages between a network functions virtualization infrastructure (NFVI) element 52, a virtual infrastructure manager (VIM) 54, a trusted slice manager (TSM) 56 and an attestation server (AS) 58. The NFVI element 52 may be an element of the network function virtualization infrastructure (NFVI) 12 described above. Similarly, the virtual infrastructure manager (VIM) 54, the trusted slice manager (TSM) 56 and the attestation server (AS) 58 may be similar to the VIM 14, the TSM 16 and the attestation server 18 described above.

The message sequence 60 starts with a define slice instruction 61 received at the trusted slice manager 56. This operation may define a slice (e.g. a security slice) in terms of identity and name. Other characteristics such as encryption keys, authentication, access etc. may also be defined. A required level of assurance (LoA) may be defined for the slice. Other aspects, such as LoA failure handling may also be defined.

As shown in FIG. 6, an add element instruction 62 is received at the trusted slice manager 56 requesting the addition of a network element to the relevant security slice.

In response to the instruction 62, the VIM 54 may be contacted to obtain element information to decide upon availability, authentication parameters, suitability for inclusion in that slice etc. Elements are not necessarily restricted to traditional NFVI elements such as servers, but may include VM/ VNF images, their potential instances, Edge,IoT and UE (user equipment) devices. Inclusion into a security slice may also involve other NFV MANO components such as the Orchestrator and VNFM in making these decisions. Interaction with the OSS/BSS layer and other MANO components is also permittable and possible.

As shown in FIG. 6, in response to receiving the add element instruction 62, a get element information message 63a may be sent from the TSM 56 to the VIM 54 and a get message information message 63b may be sent from the VIM 54 to the NFVI element 52. In response to the message 63b, the request information is provided by to the NFVI element to the VIM 54 (in return message 64a) and to the TSM 56 (in a return message 64b).

It should be noted that the messages 63 and 64 are provided by way of example only. Alternative arrangements to enable the TSM 56 to obtain the requirement element information from the NFVI element 52 could be provided.

As shown in FIG. 6, a check instruction 65 is received at the trusted slice manager 56. In response to the check instruction 65, checks are performed on the relevant network elements and subsequent decisions made about the level of assurance achieved. The TSM 56 sends a request 66 to the attestation server (AS) 58 for the security attributes corresponding to the relevant network element. The AS 58 is responsible for doing all the integrity checks required for the LoA of the trusted slice (gathering measurements and determining trust status). The AS 58 may also be only responsible for gathering all the measurements and the TSM 56 may have the final decision on the trust status of the element after analysing the information it has about its integrity levels.

In response to the request 66, the AS 58 may send a message 67 to the relevant element 52 for the security attributes, which are received in the reply message 68 and then returned to the TSM 56 in a message 69. Thus, the message 69 provides the security attributes requested in the message 66 to the TSM 56. In the example message sequence 60, the AS 58 checks the elements either directly or by proxy via the VIM/ VNFM, and the subsequently makes a decision on the trustworthiness and trust status of that element.

The TSM 56 processes the received security attributes to determine a security status of the security slice (as indicated by the analysis step 70 and decision step 71). The TSM 56 may perform any amount of analysis and decision-making either at a point in time or also including historical information as required to determine whether an element or whole or partial slice has achieved the required level of assurance.

The TSM 56 may send a message 72 to the VIM 54 indicating the security status of the security slice. The decision to inform either the VIM 54 or other components is optional in some embodiments.

If an element within a security slice fails the LoA checks (e.g. is below a required level) then it may be marked accordingly. Various options are available for handling this situation, including but not limited to:
- Ignore the relevant element
- Inform the VIM
- Inform the Security Orchestrator
- Inform the SDN
- Perform repair

The exact choices made (there may be more than one, unless failure is ignored) may depend upon the system configuration. For example, LoA failure might trigger an alert to the/ a security orchestrator, which in turn may cause the VIM to migrate workload away from that element.

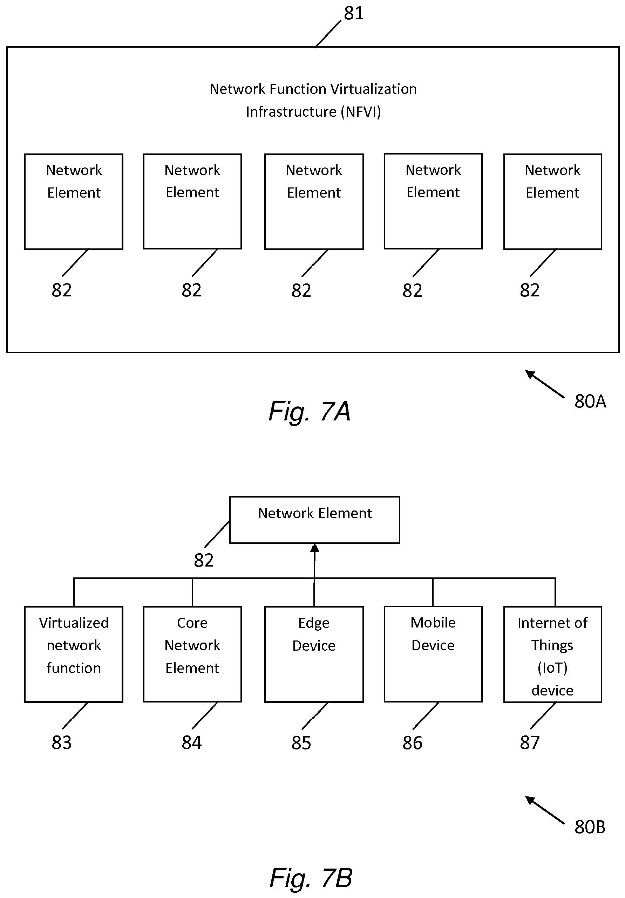

FIG. 7A is a block diagram of a system, indicated generally by the reference numeral 80A, in accordance with an example embodiment. The system 80A comprises a network function virtualization infrastructure (NFVI) 81. The NFVI 81 comprises a plurality of network elements 82. As discussed earlier, the plurality of network elements 82 may take many forms. FIG. 7B is a block diagram of a system, indicated generally by the reference numeral 80B, in accordance with an example embodiment. The system 80B shows the different types of exemplary network elements 82. For example, a network element 82 may be one or more of a virtualized network function 83, core network element 84, edge device 85, mobile device 86, and/or Internet of Things (IoT) device 87 (such as a wireless sensor). Clearly more or fewer elements may be provided within NFVI 81.

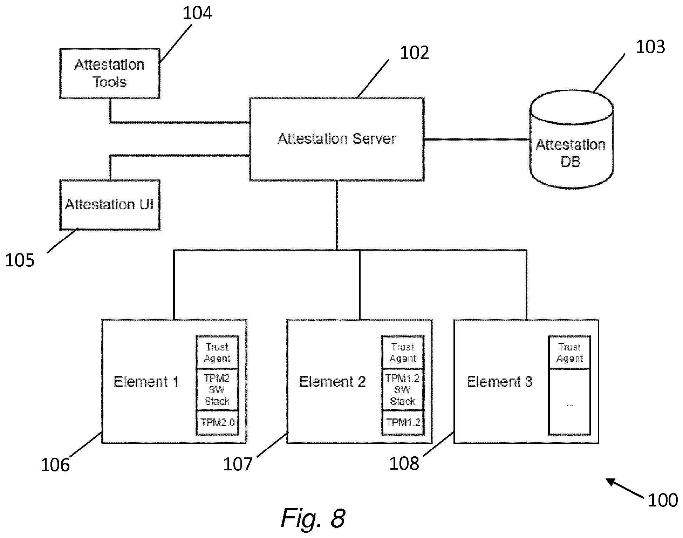

FIG. 8 is a block diagram of a system, indicated generally by the reference numeral 100, in accordance with an example embodiment. The system 100 comprises an attestation server 102, a first element 106, a second element 107, and a third element 108. The system 100 additionally comprises an attestation database 103, attestation tools 104, and an attestation user interface 105 in communication with the attestation server 102. The first, second and third elements 106 to 108 are provided by way of example. Clearly more (or fewer) elements may be provided within a system. The elements 106 to 108 may be elements of a cloud computing system (e.g. a trusted cloud). The first to third elements 106 to 108 may be hardware modules and, as shown in FIG. 8, are in communication with the attestation server 102 via a network bus. The elements 106 to 108 may form part of a distributed or cloud computing system. The attestation server 102 may, for example, be tasked with monitoring a trust status of the system 100 and the elements within the system.

The elements 106 to 108 are examples on the network elements discussed above with respect to FIGS 1 to 7.

In order to monitor aspects of the system 100, the attestation server 102 may communicate with each of the elements 106 to 108 to obtain measurements. For example, a trusted platform module (TPM) may be provided at each element to generate a cryptographic hash that summarises the hardware and software configuration of the relevant module. A set of platform configuration registers (PCRs) may be provided which store cryptographic hashes of measurements of the relevant components. Ahash may, for example, be obtained from a TPM by a mechanism known as quoting. A quote may be generated for a set of PCRs, with the TPM generating a hash from the contents of the set of PCRs and signing them with an attestation key (AK) unique to the respective TPM (e.g. with a private key of an attestation key pair).

The attestation server 102 may offer a query application programming interface (API) that can be used, for example, by command line tools. The attestation user interface 105 of the system 100 (e.g. a web application) may enable a user to interact with the attestation server 102 (e.g. to enable viewing of a trust status of a cloud or to request measurements of one or more elements of the system 100).

The first element 106 comprises a trust agent 110a, a trusted platform module (TPM) software stack 110b and a trusted platform module 110c. Similarly, the second element 107 comprises a trust agent 112a, a trusted platform module (TPM) software stack 112b and a trusted platform module 112c. The third element 108 comprises a trust agent 114a, a trusted platform module (TPM) software stack 114b and a trusted platform module 114c.

The trust agents 112a, 112a and 114a at each element of the system 100 provide an interface between the respective element and the attestation server 102.

As indicated above, each of the elements 106 to 108 of the system may have a trusted platform module associated therewith. The trusted platform module may form part of the respective element. The trusted platform module may be implemented as a device of the respective element, but may alternatively be distributed. In essence, the trusted platform module is a specification of behaviour implemented by the relevant element.

The trusted platform modules (TPMs) 110c, 112c and 114c may store cryptographic keys, certification and confidential data. For example, two unique key-pairs may be stored at (or be available to) each TPM: an endorsement key pair (EK) and an attestation key pair (AK). A set of platform configuration registers (PCRs) may be provided to store measurements, in the form of hashes, of hardware or software components of the relevant machine (e.g. the element within which the TPM is installed). A TPM may be asked for provide a "quote" for a defined set of PCRs (e.g. a hash over the stored value of the defined PCRs). The TPM may then return the quote for the requested PCRs, a cryptographic signature of that quote (signed by the attestation key, e.g. the private key of the attestation key pair) and possibly other information, such as a timestamp and a reboot count.

An attestation policy is a set of expected values for different measurements that can be taken from a machine (such as one or more of the elements 106 to 109 described above). If a machine has a TPM, a policy can be a mapped between a PCR number and an expected value. An administrator can define policies in order for a machine to be considered in a trusted state. When attestation is carried out, the measurements can be checked against the expected values in the policy. The expected values are reference values that can be used to define a "correct" state of a system and/or can be used to detect changes in a system. When quoting, if a machine stops following a certain policy, this may indicate that what was measured by the policy has changed in the system.

The attestation server 102 may be responsible for obtaining quotes from the elements 106 to 108. For example, the attestation server 102 may be responsible for attesting the devices and checking the status of the relevant system (e.g. the system 100). During an attestation process, the attestation server 102 may compare values obtained by quoting an element to a defined attestation policy for the relevant element(s). Then, if measurements from an element no longer satisfy the relevant policy/policies, an action may be initiated (e.g. generating system alerts for administrators).

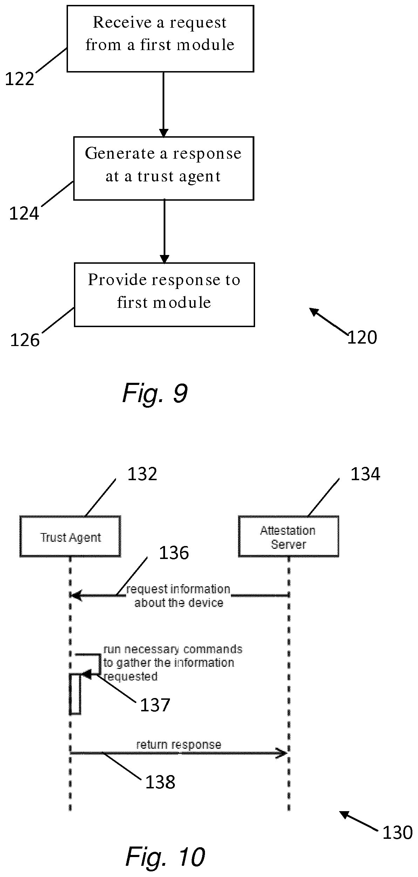

FIG. 9 is a flow chart showing an algorithm, indicated generally by the reference numeral 120, in accordance with an example embodiment. The algorithm 120 may be implemented as any one of the elements 106 to 108 of the system 100.

The algorithm 120 starts at operation 122, where a request is received from a first module (such as the attestation server 102) at a request receiving means of one of the elements of the system (such as one of the elements 106 to 108 of the system 100 described above). As described further below, the request may include a command, a nonce (to prevent replay attacks) and details of a cryptographic key for use in responding to the request. In addition, cryptographic structures may be provided by the relevant transport layer (e.g. secure sockets layer (SSL) or transport layer security (TLS)).

At operation 124, a response to said request is generated at a response generating means of the respective element of the system 100. The response may be generated at a trust agent of the respective element (such as one of the trust agents 110a, 112a and 114a described above). The response may include one or more of the following (depending on the received command): an identity of said element; a cryptographic hash of data representing configurations of said element; and capabilities relating to said element of the computing system.

At operation 126, the response is provided to the first module (such as the attestation server 102) in response to said request. As described further below, the response includes the nonce (as provided in the request) and is signed using the cryptographic key (as identified in the request).

Thus, in the system 100, the relevant trust agent (110a, 112a, 114a) may receive the request from the attestation server 102 and return the response to the attestation server. The relevant trust agent may, at least in part, generate the response to the request. Thus, the trust agent may be one or more of: the means for receiving the request (operation 122 discussed above); the means for generating the response (operation 124 discussed above); and the means for providing the response (operation 126 discussed above).

FIG. 10 shows a message sequence, indicated generally by the reference numeral 130, in accordance with an example embodiment. The message sequence 130 is an example implementation of the algorithm 120 described above.

The message sequence 130 is implemented between a trust agent 132 (such as one of the trust agents 110a, 112a and 114a described above) and an attestation server 134 (such as the server 102 described above).

Arequest 136 is received at the trust agent 132 from the attestation server 134, implementing the operation 122. The request consists of a command (such as the get_identity, get_quote and get_capabilities commands discussed further below) and possible additional data, such as a nonce and a cryptographic key. Of course, other commands could also be implemented in example embodiments.

The trust agent 132 processes the request 136 and runs any commands on the system needed for gathering the requested information (as indicated by the reference numeral 137).

Finally, the trust agent sends a response 138 to the attestation server with the requested information, implementing the operation 126. Details of example responses 138 are provided below.

As indicated above, the request 132 may include one or more of: get_identity; get_quote; and get_capabilities commands.

A get_identity command may request the identity of the element that the trust agent 132 is running on (e.g. the identity of the relevant element 106 to 108). In the case of a device with a trusted platform module (TPM), the identity may take the form of public keys of the trusted platform module (e.g. public keys of endorsement key (EK) and attestation key (AK) pairs). Alternatively, or additionally, the identity may include metadata that can be used to identify the relevant machine, but may not be permanent identities (e.g. an IP address, MAC address, system information OpenStack ID etc.). Other implementations (e.g. non-TPM based implementations) are possible. For example, a single key may be provided. In some hardware security modules, for example, a single key, sometimes called an attestation key, may be provided.

A get_quote command may request the results of quoting or measuring an element on which the trust agent 132 is running, according to some policy indicated by the attestation server 134. The quote may take the form of a cryptographic hash of data representing configurations of said element and may be generated by a trusted platform module. In one embodiment, a cryptographic hash of data representing configurations of an element is a cryptographic hash of data representing hardware, firmware and/or software configurations of said element (as stored, for example, in one or more platform confirmation registers).

A get_capabilities command may request information about the capabilities of the device, such as the trusted platform module, TPM. A response to a get_capabilities command may identify measurements (or other data) that can be provided to the attestation server. Thus, the capabilities may be used to decide what kind of measurements can be obtained by the attestation server 134 from the respective element. The capabilities information may also be used to identify properties of the TPM, such as the manufacturer or the installed firmware version.

The response 138 may include one or more of the following fields:
- Type. The type field may identify a type of the relevant device. The type field may, for example, be used by the attestation server 134 to determine what fields and/or data to expect in the response;
- Nonce (e.g. the nonce included in the request). Thus, the response can be matched with the appropriate request;
- Command (e.g. the name of the command, as provided in the request, such as 'get_identity', 'get_quote', or 'get_capabilities');
- timestamp_start (e.g. indicating when the request was received);
- timestamp_end (e.g. indicating when the trust agent completed processing the request); and
- signature (e.g. the signature of the response object, using the key indicated in the parameters of the request).

Of course, other fields may be provided instead of, or in addition to, some or all of the fields described above.

By way of example, in the case of a device with a TPM 2.0, a response to a get_identity request may take the following form:

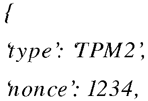

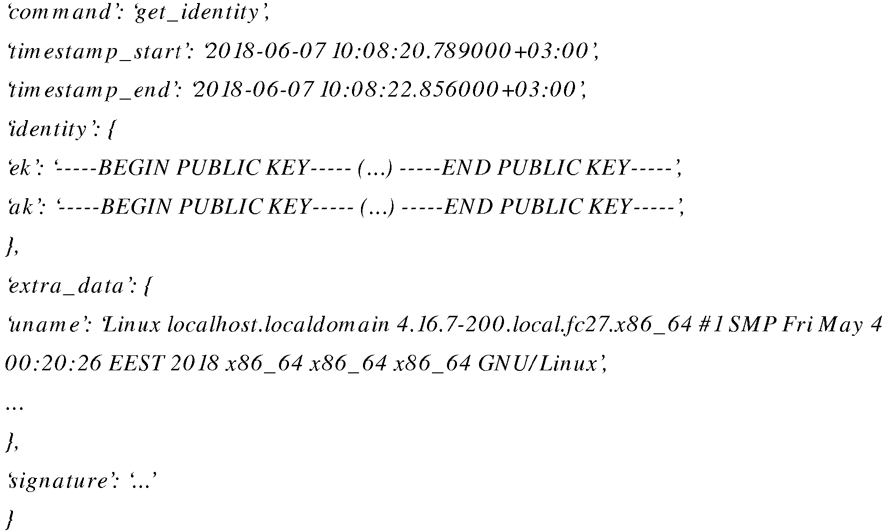

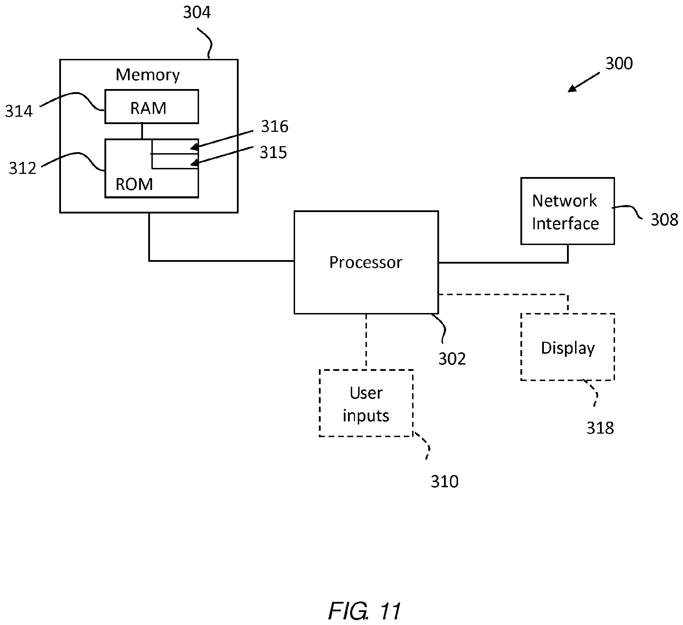

For completeness, FIG. 11 is a schematic diagram of components of one or more of the example embodiments described previously, which hereafter are referred to generically as processing systems 300. A processing system 300 may have a processor 302, a memory 304 closely coupled to the processor and comprised of a RAM 314 and ROM 312, and, optionally, user input 310 and a display 318. The processing system 300 may comprise one or more network/ apparatus interfaces 308 for connection to a network/ apparatus, e.g. a modem which may be wired or wireless. Interface 308 may also operate as a connection to other apparatus such as device/ apparatus which is not network side apparatus. Thus, direct connection between devices/ apparatus without network participation is possible.

The processor 302 is connected to each of the other components in order to control operation thereof.

The memory 304 may comprise a non-volatile memory, such as a hard disk drive (HDD) or a solid-state drive (SSD). The ROM 312 of the memory 314 stores, amongst other things, an operating system 315 and may store software applications 316. The RAM 314 of the memory 304 is used by the processor 302 for the temporary storage of data. The operating system 315 may contain code which, when executed by the processor implements aspects of the algorithms 30, 40 and 120 or the message sequence 60 described above. Note that in the case of small device/ apparatus the memory can be most suitable for small size usage i.e. not always hard disk drive (HDD) or solid-state drive (SSD) is used.

The processor 302 may take any suitable form. For instance, it may be a microcontroller, a plurality of microcontrollers, a processor, or a plurality of processors.

The processing system 300 may be a standalone computer, a server, a console, or a network thereof. The processing system 300 and needed structural parts may be all inside device/ apparatus such as IoT device/ apparatus i.e. embedded to very small size

In some example embodiments, the processing system 300 may also be associated with external software applications. These may be applications stored on a remote server device/ apparatus and may run partly or exclusively on the remote server device/ apparatus. These applications may be termed cloud-hosted applications. The processing system 300 may be in communication with the remote server device/ apparatus in order to utilize the software application stored there.

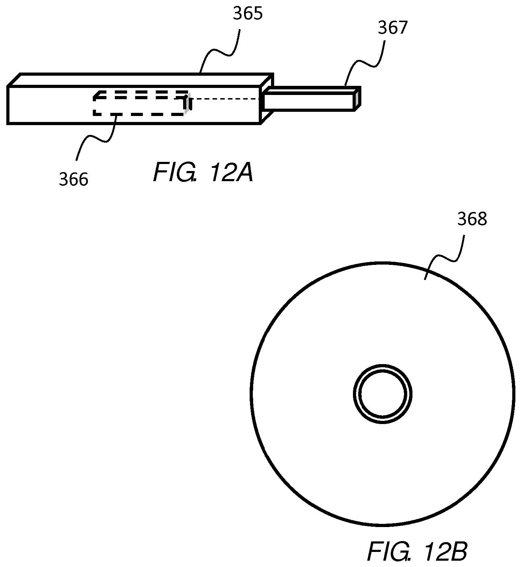

FIGS. 12A and 12B show tangible media, respectively a removable memory unit 365 and a compact disc (CD) 368, storing computer-readable code which when run by a computer may perform methods according to example embodiments described above. The removable memory unit 365 may be a memory stick, e.g. a USB memory stick, having internal memory 366 storing the computer-readable code. The memory 366 may be accessed by a computer system via a connector 367. The CD 368 may be a CD-ROM or a DVD or similar. Other forms of tangible storage media may be used. Tangible media can be any device/ apparatus capable of storing data/information which data/ information can be exchanged between devices/ apparatus/ network.

Embodiments of the present invention may be implemented in software, hardware, application logic or a combination of software, hardware and application logic. The software, application logic and/or hardware may reside on memory, or any computer media. In an example embodiment, the application logic, software or an instruction set is maintained on any one of various conventional computer-readable media. In the context of this document, a "memory" or "computer-readable medium" may be any non-transitory media or means that can contain, store, communicate, propagate or transport the instructions for use by or in connection with an instruction execution system, apparatus, or device, such as a computer.

Reference to, where relevant, "computer-readable storage medium", "computer program product", "tangibly embodied computer program" etc., or a "processor" or "processing circuitry" etc. should be understood to encompass not only computers having differing architectures such as single/multi-processor architectures and sequencers/ parallel architectures, but also specialised circuits such as field programmable gate arrays FPGA, application specify circuits ASIC, signal processing devices/ apparatus and other devices/ apparatus. References to computer program, instructions, code etc. should be understood to express software for a programmable processor firmware such as the programmable content of a hardware device/ apparatus as instructions for a processor or configured or configuration settings for a fixed function device/ apparatus, gate array, programmable logic device/ apparatus, etc.

As used in this application, the term "circuitry" refers to all of the following: (a) hardware-only circuit implementations (such as implementations in only analogue and/or digital circuitry) and (b) to combinations of circuits and software (and/or firmware), such as (as applicable): (i) to a combination of processor(s) or (ii) to portions of processor(s)/ software (including digital signal processor(s)), software, and memory(ies) that work together to cause an apparatus, such as a server, to perform various functions) and (c) to circuits, such as a microprocessor(s) or a portion of a microprocessor(s), that require software or firmware for operation, even if the software or firmware is not physically present.

If desired, the different functions discussed herein may be performed in a different order and/or concurrently with each other. Furthermore, if desired, one or more of the above-described functions may be optional or may be combined. Similarly, it will also be appreciated that the flow charts and message sequences of Figures 4 to 6 and 9 are examples only and that various operations depicted therein may be omitted, reordered and/or combined.

It will be appreciated that the above described example embodiments are purely illustrative and are not limiting on the scope of the invention. Other variations and modifications will be apparent to persons skilled in the art upon reading the present specification.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. An apparatus comprising:
means for sending one or more requests (66) to an attestation server (58),
wherein each request requests security attributes corresponding to one of one or more network elements of a security slice of a system, wherein the one or more network elements belong to one or more network slices, wherein network elements are assigned to security slices based on security attributes of said network elements regardless of which network slice the network elements belong to;
means for receiving the requested security attributes (69) from the attestation server; and
means for processing (70, 71) the received security attributes to determine a security status of the security slice.

2. An apparatus as claimed in claim 1, further comprising means for outputting the determined security status of the security slice.

3. An apparatus as claimed in claim 1 or claim 2, further comprising means for comparing the determined security status of the security slice with a required security status for the security slice.

4. An apparatus as claimed in any one of claims 1 to 3, further comprising means for adding one or more additional network elements to the security slice.

5. An apparatus as claimed in claim 4, wherein the means for adding one or more network elements to the security slice comprises means for obtaining information relating to each of the one or more network elements to be added to the security slice.

6. An apparatus as claimed in any one of the preceding claims, further comprising:
means for receiving, from the attestation server, security attributes of a first additional network element to be added to the security slice;
means for determining a security status of the first additional network element based on the received security attributes of said first additional network element; and
means for preventing the first additional network element from being added to the security slice in the event that said integrity level is below a required level.

7. An apparatus as claimed in any one of the preceding claims, wherein the means for processing the received security attributes further comprises means for determining whether any of the network elements of the security slice fail to satisfy a defined requirement.

8. An apparatus as claimed in any one of the preceding claims, wherein the apparatus is one of a security attribute manager and a trusted slice manager.

9. An apparatus as claimed in any one of the preceding claims, wherein a network element comprises at least one of: a physical network element, and/or a virtualized network function, and/or a virtual machine image, and/or a virtual machine instance.

10. An apparatus as claimed in any of the preceding claims, wherein a network element comprises at least one of: a core network element, and/or an edge device, and/or a mobile device, and/or an Internet of Things device such as a wireless sensor.

11. An apparatus as claimed in any one of the preceding claims, wherein the requested security attributes comprise at least one of: a measured boot capability, and/or a secure boot capability, and/or a runtime integrity measurement, and/or a virtual machine integrity level.

12. An apparatus as claimed in any one of the preceding claims, wherein the security status of the security slice comprises a level of assurance.

13. An apparatus as claimed in any one of the preceding claims, wherein the means comprises at least one processor; and at least one memory including computer program code, the at least one memory and computer program code configured to, with the at least one processor, cause the performance of the apparatus.

14. A system comprising an apparatus as claimed in any one of the preceding claims and further comprising:
an attestation server for receiving requests for security attributes; and
one or more network elements.

15. A system as claimed in claim 14, wherein each network element further comprises a trust agent for providing an interface between the respective network element and said attestation server.

16. A method comprising:
sending one or more requests (66) to an attestation server (58), wherein each request requests security attributes corresponding to one of one or more network elements of a security slice of a system, wherein the one or more network elements belong to one or more network slices, wherein network elements are assigned to security slices based on security attributes of said network elements regardless of which network slice the network elements belong to;
receiving the requested security attributes (69) from the attestation server; and
processing (70, 71) the received security attributes to determine a security status of the security slice.

17. Computer-readable instructions which, when executed by computing apparatus, cause the computing apparatus to perform a method of:
sending one or more requests (66) to an attestation server (58), wherein each request requests security attributes corresponding to one of one or more network elements of a security slice of a system, wherein the one or more network elements belong to one or more network slices, wherein network elements are assigned to security slices based on security attributes of said network elements regardless of which network slice the network elements belong to;
receiving the requested security attributes (69) from the attestation server; and
processing (70, 71) the received security attributes to determine a security status of the security slice.

## Patentansprüche

1. Einrichtung, die Folgendes umfasst:
Mittel zum Senden von einer oder mehreren Anforderungen (66) an einen Attestierungsserver (58), wobei jede Anforderung Sicherheitsattribute anfordert, die einem von einem oder mehreren Netzwerkelementen einer Sicherheitsslice eines Systems entsprechen, wobei das eine oder die mehreren Netzwerkelemente zu einer oder mehreren Netzwerkslices gehören, wobei Netzwerkelemente Sicherheitsslices auf Basis von Sicherheitsattributen der Netzwerkelemente zugewiesen sind, unabhängig davon zu welcher Netzwerkslice die Netzwerkelemente gehören;
Mittel zum Empfangen der angeforderten Sicherheitsattribute (69) vom Attestierungsserver; und
Mittel zum Verarbeiten (70, 71) der empfangenen Sicherheitsattribute, um einen Sicherheitsstatus der Sicherheitsslice zu bestimmen.

2. Einrichtung nach Anspruch 1, die ferner Mittel zum Ausgeben des bestimmten Sicherheitsstatus der Sicherheitsslice umfasst.

3. Einrichtung nach Anspruch 1 oder Anspruch 2, die ferner Mittel zum Vergleichen des bestimmten Sicherheitsstatus der Sicherheitsslice mit einem angeforderten Sicherheitsstatus für die Sicherheitsslice umfasst.

4. Einrichtung nach einem der Ansprüche 1 bis 3, die ferner Mittel zum Hinzufügen von einem oder mehreren zusätzlichen Netzwerkelementen zur Sicherheitsslice umfasst.

5. Einrichtung nach Anspruch 4, wobei die Mittel zum Hinzufügen von einem oder mehreren Netzwerkelementen zur Sicherheitsslice Mittel zum Erhalten von Informationen umfassen, die sich auf jedes des einen oder der mehreren Netzwerkelemente beziehen, die zur Sicherheitsslice hinzuzufügen sind.

6. Einrichtung nach einem der vorhergehenden Ansprüche, die ferner Folgendes umfasst:
Mittel zum Empfangen von Sicherheitsattributen eines ersten zusätzlichen Netzwerkelements, das zur Sicherheitsslice hinzuzufügen ist, vom Attestierungsserver;
Mittel zum Bestimmen eines Sicherheitsstatus des ersten zusätzlichen Netzwerkelements auf Basis der empfangenen Sicherheitsattribute des ersten zusätzlichen Netzwerkelements; und
Mittel zum Verhindern, dass das erste zusätzliche Netzwerkelement in dem Fall, in dem die Integritätsstufe unter einer angeforderten Stufe liegt, zur Sicherheitsslice hinzugefügt wird.

7. Einrichtung nach einem der vorhergehenden Ansprüche, wobei die Mittel zum Verarbeiten der empfangenen Sicherheitsattribute ferner Mittel zum Bestimmen umfassen, ob eines der Netzwerkelemente der Sicherheitsslice eine definierte Anforderung nicht erfüllt.

8. Einrichtung nach einem der vorhergehenden Ansprüche, wobei die Einrichtung eines von einem Sicherheitsattributverwalter und einem vertrauenswürdigen Sliceverwalter ist.

9. Einrichtung nach einem der vorhergehenden Ansprüche, wobei ein Netzwerkelement mindestens eines von Folgendem umfasst: einem physischen Netzwerkelement, und/oder einer virtualisierten Netzwerkfunktion, und/oder einem virtuellen Maschinenbild, und/oder einer virtuellen Maschineninstanz.

10. Einrichtung nach einem der vorhergehenden Ansprüche, wobei ein Netzwerkelement mindestens eines von Folgendem umfasst: einem Kernnetzwerkelement, und/oder einer Edgevorrichtung, und/oder einer mobilen Vorrichtung, und/oder einer Internet-der-Dinge-Vorrichtung, wie etwa einem drahtlosen Sensor.

11. Einrichtung nach einem der vorhergehenden Ansprüche, wobei die angeforderten Sicherheitsattribute mindestens eines von Folgendem umfassen: einer gemessenen Boottfähigkeit, und/oder einer sicheren Boottfähigkeit, und/oder einer Laufzeitintegritätsmessung, und/oder einer virtuellen Maschinenintegritätsstufe.

12. Einrichtung nach einem der vorhergehenden Ansprüche, wobei der Sicherheitsstatus der Sicherheitsslice ein Maß der Zusicherung umfasst.

13. Einrichtung nach einem der vorhergehenden Ansprüche, wobei die Mittel mindestens einen Prozessor; und mindestens einen Speicher, der Computerprogrammcode beinhaltet, umfassen, wobei der mindestens eine Speicher und der Computerprogrammcode dazu ausgelegt sind, mit dem mindestens einen Prozessor die Durchführung der Einrichtung zu veranlassen.

14. System, das eine Einrichtung nach einem der vorhergehenden Ansprüche sowie ferner Folgendes umfasst:
einen Attestierungsserver zum Empfangen von Anforderungen von Sicherheitsattributen; und
ein oder mehrere Netzwerkelemente.

15. System nach Anspruch 14, wobei jedes Netzwerkelement ferner einen Vertrauensagenten zum Bereitstellen einer Schnittstelle zwischen dem jeweiligen Netzwerkelement und dem Attestierungsserver umfasst.

16. Verfahren, das Folgendes umfasst:
Senden von einer oder mehreren Anforderungen (66) an einen Attestierungsserver (58), wobei jede Anforderung Sicherheitsattribute anfordert, die einem von einem oder mehreren Netzwerkelementen einer Sicherheitsslice eines Systems entsprechen, wobei das eine oder die mehreren Netzwerkelemente zu einer oder mehreren Netzwerkslices gehören, wobei Netzwerkelemente Sicherheitsslices auf Basis von Sicherheitsattributen der Netzwerkelemente zugewiesen sind, unabhängig davon zu welcher Netzwerkslice die Netzwerkelemente gehören;
Empfangen der angeforderten Sicherheitsattribute (69) vom Attestierungsserver; und
Verarbeiten (70, 71) der empfangenen Sicherheitsattribute, um einen Sicherheitsstatus der Sicherheitsslice zu bestimmen.

17. Computerlesbare Anweisungen, die, wenn sie von einer Datenverarbeitungseinrichtung ausgeführt werden, die Datenverarbeitungseinrichtung veranlassen, folgendes Verfahren durchzuführen:
Senden von einer oder mehreren Anforderungen (66) an einen Attestierungsserver (58), wobei jede Anforderung Sicherheitsattribute anfordert, die einem von einem oder mehreren Netzwerkelementen einer Sicherheitsslice eines Systems entsprechen, wobei das eine oder die mehreren Netzwerkelemente zu einer oder mehreren Netzwerkslices gehören, wobei Netzwerkelemente Sicherheitsslices auf Basis von Sicherheitsattributen der Netzwerkelemente zugewiesen sind, unabhängig davon zu welcher Netzwerkslice die Netzwerkelemente gehören;
Empfangen der angeforderten Sicherheitsattribute (69) vom Attestierungsserver; und
Verarbeiten (70, 71) der empfangenen Sicherheitsattribute, um einen Sicherheitsstatus der Sicherheitsslice zu bestimmen.

## Revendications

1. Appareil comprenant :
des moyens pour envoyer une ou plusieurs demandes (66) à un serveur d'attestation (58), dans lequel chaque demande demande des attributs de sécurité correspondant à l'un d'un ou plusieurs éléments de réseau d'une tranche de sécurité d'un système, dans lequel les un ou plusieurs éléments de réseau appartiennent à une ou plusieurs tranches réseau, dans lequel les éléments de réseau sont attribués à des tranches de sécurité sur la base d'attributs de sécurité de desdits éléments de réseau indépendamment de la tranche de réseau à laquelle appartiennent les éléments de réseau ;
des moyens pour recevoir les attributs de sécurité (69) demandés en provenance du serveur d'attestation ; et
des moyens pour traiter (70, 71) les attributs de sécurité reçus pour déterminer un statut de sécurité de la tranche de sécurité.

2. Appareil selon la revendication 1, comprenant en outre des moyens pour délivrer le statut de sécurité déterminé de la tranche de sécurité.

3. Appareil selon la revendication 1 ou la revendication 2, comprenant en outre des moyens pour comparer le statut de sécurité déterminé de la tranche de sécurité avec un statut de sécurité requis pour la tranche de sécurité.

4. Appareil selon l'une des revendications 1 à 3, comprenant en outre des moyens pour ajouter un ou plusieurs éléments de réseau supplémentaires à la tranche de sécurité.

5. Appareil selon la revendication 4, dans lequel les moyens pour ajouter un ou plusieurs éléments de réseau à la tranche de sécurité comprennent des moyens pour obtenir des informations relatives à chacun des un ou plusieurs éléments de réseau à ajouter à la tranche de sécurité.

6. Appareil selon l'une des revendications précédentes, comprenant en outre :
des moyens pour recevoir du serveur d'attestation des attributs de sécurité d'un premier élément de réseau supplémentaire à ajouter à la tranche de sécurité ;
des moyens pour déterminer un statut de sécurité du premier élément de réseau supplémentaire sur la base des attributs de sécurité reçus dudit premier élément de réseau supplémentaire ; et
des moyens pour empêcher l'ajout du premier élément de réseau supplémentaire à la tranche de sécurité dans le cas où ledit niveau d'intégrité est en dessous d'un niveau requis.

7. Appareil selon l'une des revendications précédentes, dans lequel les moyens pour traiter les attributs de sécurité reçus comprennent en outre des moyens pour déterminer si l'un des éléments de réseau de la tranche de sécurité ne satisfait pas à une exigence définie.

8. Appareil selon l'une des revendications précédentes, dans lequel l'appareil est un parmi un gestionnaire d'attribut de sécurité et un gestionnaire de tranche de confiance.

9. Appareil selon l'une des revendications précédentes, dans lequel un élément de réseau comprend au moins un parmi : un élément physique de réseau et/ou une fonction de réseau virtualisée et/ou une image de machine virtuelle et/ou une instance de machine virtuelle.

10. Appareil selon l'une des revendications précédentes, dans lequel un élément de réseau comprend au moins un parmi : un élément de réseau central et/ou un dispositif périphérique et/ou un dispositif mobile et/ou un dispositif Internet des objets tel qu'un capteur sans fil.

11. Appareil selon l'une des revendications précédentes, dans lequel les attributs de sécurité demandés comprennent au moins un parmi : une capacité d'amorçage mesurée et/ou une capacité d'amorçage de sécurité et/ou une mesure d'intégrité d'exécution et/ou un niveau d'intégrité de machine virtuelle.

12. Appareil selon l'une des revendications précédentes, dans lequel le statut de sécurité de la tranche de sécurité comprend un niveau d'assurance.

13. Appareil selon l'une des revendications précédentes, dans lequel les moyens comprennent au moins un processeur ; et au moins une mémoire comportant un code de programme informatique, l'au moins une mémoire et le code de programme informatique étant configurés pour, avec l'au moins un processeur, provoquer le fonctionnement de l'appareil.

14. Système comprenant un appareil selon l'une des revendications précédentes et comprenant en outre :
un serveur d'attestation pour recevoir des demandes concernant des attributs de sécurité ; et
un ou plusieurs éléments de réseau.

15. Système selon la revendication 14, dans lequel chaque élément de réseau comprend en outre un agent de confiance pour fournir une interface entre l'élément de réseau respectif et ledit serveur d'attestation.

16. Procédé comprenant les étapes suivantes :
envoyer une ou plusieurs demandes (66) à un serveur d'attestation (58), dans lequel chaque demande demande des attributs de sécurité correspondant à l'un d'un ou plusieurs éléments de réseau d'une tranche de sécurité d'un système, dans lequel les un ou plusieurs éléments de réseau appartiennent à une ou plusieurs tranches réseau, dans lequel les éléments de réseau sont attribués à des tranches de sécurité sur la base d'attributs de sécurité de desdits éléments de réseau indépendamment de la tranche de réseau à laquelle appartiennent les éléments de réseau ;
recevoir les attributs de sécurité (69) demandés en provenance du serveur d'attestation ; et
traiter (70, 71) les attributs de sécurité reçus pour déterminer un statut de sécurité de la tranche de sécurité.

17. Instructions lisibles par ordinateur qui, lorsqu'elles sont exécutées par un appareil informatique, amènent l'appareil informatique à réaliser un procédé pour :
envoyer une ou plusieurs demandes (66) à un serveur d'attestation (58), dans lesquelles chaque demande demande des attributs de sécurité correspondant à l'un d'un ou plusieurs éléments de réseau d'une tranche de sécurité d'un système, dans lesquelles les un ou plusieurs éléments de réseau appartiennent à une ou plusieurs tranches réseau, dans lesquelles les éléments de réseau sont attribués à des tranches de sécurité sur la base d'attributs de sécurité de desdits éléments de réseau indépendamment de la tranche de réseau à laquelle appartiennent les éléments de réseau ;
recevoir les attributs de sécurité (69) demandés en provenance du serveur d'attestation ; et
traiter (70, 71) les attributs de sécurité reçus pour déterminer un statut de sécurité de la tranche de sécurité.
